# EUROPEAN PATENT SPECIFICATION

(11) **EP 1 593 283 B1**
(45) Date of publication and mention of the grant of the patent: **28.08.2013**
(21) Application number: 04710050.8
(22) Date of filing: 11.02.2004
(51) Int. Cl.: H04W 48/20

(54) **ACCESS POINT SERVICE FOR MOBILE USERS**
ZUGANGSPUNKTDIENST FÜR MOBILBENUTZER
SERVICE DE POINTS D'ACCES POUR UTILISATEURS MOBILES

(30) Priority: 12.02.2003 US 446546 P
(43) Date of publication of application: 09.11.2005
(73) Proprietor: Nokia Siemens Networks Oy, 02610 Espoo (FI)
(72) Inventor: HUSSA, Timo, FI-86600 Haapavesi (FI)
(74) Representative: Bruglachner, Thomas E.
(86) International application number: PCT/FI2004/000063
(87) International publication number: WO 2004/073342

(56) References cited:
- GB-A- 2 343 337
- US-A1- 2002 059 453
- US-B1- 6 332 077

## Description

### BACKGROUND OF THE INVENTION:

### Field of the Invention:

The invention relates generally to the provision of services for users of a mobile communication network, who are also able to use another access network, such as a WLAN (Wireless Local Area Network) access network, external to the mobile communication network. The service is typically a location service, i.e. a service in which the location of the mobile terminal is utilized for providing the service.

### Description of the Related Art:

The current development towards truly mobile computing and networking has brought on the evolvement of various access technologies that also provide the users with access to the Internet when they are outside their own home network. At present, wireless Internet access is typically based on either wireless LAN technology or mobile networks, or both.

In wireless LAN technology, the mobile terminals are provided with wireless LAN cards, whereby they can access the Internet through wireless LAN access points, which are mainly located in various hot spots, such as airports, convention centers, railway stations, or shopping malls.
An example of the new mobile network technologies enabling Internet access is GPRS (General Packet Radio Service). GPRS aims at providing high-quality services for present GSM subscribers by efficiently utilizing the current network infrastructure and protocols. GPRS evolved from GSM with the introduction of two new network elements: SGSN (Serving GPRS Support Node) and GGSN (Gateway GPRS Support Node). These elements also provide packet-based services in the upcoming UMTS (Universal Mobile Telecommunication System) networks.
So-called multimode radio cards are also becoming more and more common in user devices. Having his or her mobile terminal equipped with a multimode radio card, the user can choose the network type most suitable in each case, i.e. the user can choose whether the services are accessed through GPRS or WLAN, for example. For example, the user may sometimes prefer the higher data rate offered by a WLAN network.
A drawback relating to the selection of the network through which the services are accessed is that the WLAN networks are available only locally in limited areas, such as the above-mentioned hot spots. However, the user cannot always be aware where WLAN services are available.
US 2002/0059453 describes a system for locating at least one optimal access point for supporting one or more access technologies requested by a user of a mobile communication device. The determination is based, for example, on the location of the user's device, user preferences, service/application requirements and the capabilities of the available access network connections. Mapping and other information regarding the located access point(s) is provided to the relevant communication device for action by the user.

### SUMMARY OF THE INVENTION:

In one embodiment, the invention includes a method for providing an access point service for users of a mobile communication network. The method includes the steps of selecting a set of access points on a basis of a selection criterion, the set including at least one access point selected from at least one access network external to a mobile communication network, notifying a user of a mobile terminal within the mobile communication network of the location of at least one of the access points included in the set, and determining the location of the mobile terminal, the selecting step depending on the location. In the method, the selecting step further comprises calculating key figures for a plurality of access points, at least one key figure indicating a rank order for a respective access point, wherein the plurality of access points meet a predetermined precondition, and selecting the set of access points on the basis of their rank order.

In another embodiment of the invention, a system for providing an access point service for users of a mobile communication network is disclosed. The system includes memory means for storing geographical locations of a plurality of access points belonging to at least one access network external to a mobile communication network, selection means for selecting a set of access points on a basis of a predetermined selection criterion, the set including at least one access point, indication means for informing a user of the mobile communication network of the geographical location of at least one of the access points included in the set, and positioning means for determining a location of the mobile terminal, the selecting of the set of access points depending on the location of the mobile terminal. In the system, the selection unit of the set of access points is further configured to determine a first plurality of key figures for a corresponding first plurality of access points, wherein the first plurality of access points belong to the plurality of access points and wherein the first plurality of access points meet a predetermined precondition, wherein each key figure indicates a rank order for a respective access point in regard to at least one attribute within the first plurality of access points, and select the set of access points from the first plurality of access points on the basis of the first plurality of key figures.

In another embodiment, the invention provides a network element for providing an access point service for users of a mobile communication network. The network element includes a data repository for storing geographical locations of a plurality of access points belonging to at least one access network external to a mobile communication network, a control unit, responsive to the receiver unit, for selecting a set of access points on a basis of a predetermined selection criterion, the set including at least one access point and indication means for informing the user on the geographical location of at least one access point included in the set, wherein the control unit is adapted to select the set of access points on a basis of said geographical locations and a given location, wherein the given location indicates a location of a mobile terminal (100) within the mobile communication network. In the network element, the control unit is further configured to determine a first plurality of key figures for a corresponding first plurality of access points, wherein the first plurality of access points belong to the plurality of access points and wherein the first plurality of access points meet a predetermined precondition, wherein each key figure indicates a rank order for a respective access point in regard to at least one attribute within the first plurality of access points, and select the set of access points from the first plurality of access points on the basis of the first plurality of key figures. Besides a conventional fixed element within the network, the network element may also be a mobile terminal, i.e. the data repository may also be in a mobile terminal. If the data repository resides in a conventional network element within the network, the mobile terminal of the invention communicates with the network in order to be able to inform the user of the terminal of the geographical locations of the access points. Here, several implementations are possible, as discussed below.

The invention provides a mechanism that alleviates the problem related to the local nature of the WLAN services. Thus, even if the present invention cannot make the WLAN service as ubiquitous as the services offered through the mobile communication network are, the user may easily get information about the WLAN coverage in the neighborhood or in a desired geographical area.

Other features and advantages of the invention will become apparent through reference to the following detailed description and accompanying drawings.

### BRIEF DESCRIPTION OF THE DRAWINGS: .

In the following, the invention and its preferred embodiments are described more closely with reference to the examples shown in FIG. 1 to 5 in the appended drawings, wherein:

FIG. 1 illustrates a generic location service architecture of a mobile communication network;

FIG. 2 is a flow diagram illustrating the steps of the invention;

FIG. 3 illustrates the steps of the invention, when the access point set is selected in the Radio Access Network or in the Core Network;

FIG. 4 illustrates a typical network environment, when the service provider is outside the mobile communication network; and

FIG. 5 illustrates an entity performing the selection of the access point set.

### DETAILED DESCRIPTION OF THE PREFERRED EMBODIMENT(S):

In one embodiment, the invention utilizes a new mechanism that allows a mobile user to find the nearest or otherwise most suitable WLAN access point(s). It is to be noted that in this context the "access point" is a general term, which may refer to an individual WLAN base station (i.e. physical access point) or to a WLAN network or sub-network including several contiguous (physical) access points. Although the invention is especially useful for WLAN access networks, the invention can be applied in connection with any other radio access network external to the mobile communication system. The invention may further be used to inform the user of access points suitable for terminals using wireline connections, i.e. the access network does not have to be wireless. Generally, the invention thus allows the user to find the most suitable network access point, be it a wireless or a wired access point. An access point is thus a site where a connectivity service is available. The users may use any terminals appropriate for communicating with the mobile communication network, such as intelligent phones, portable computers, or PDA equipment. Although the terminal used to find out the locations of the access points is typically a multimode terminal capable of accessing the services through the mobile network and the external access network, it may also be different than the terminal for which an access point is needed. For example, a mobile phone may be used to find out the most suitable access point for a traditional WLAN terminal.

In one embodiment of the present invention, at least one network access point external to the mobile communication network is selected on the basis of predetermined criteria and the user of the mobile communication network is informed of the locations of the access points selected. Although the selection may be independent of the current location of the mobile terminal, the initiation of the service typically triggers a location procedure during which the current location of the terminal is determined. Based on the location of the terminal, known locations of network access points, and predetermined selection criteria, a set of access points is determined for the terminal. The user of the terminal is then informed of the locations of the access points selected to the set. The set may include one or more access points. As discussed below, the actual implementation of the service depends greatly on the network entity performing the selection and on the type of the location procedure utilized.

Since the present invention can, in some embodiments, utilize location services, location mechanisms are discussed first.

Locating and tracking of mobile terminals has attracted a lot of attention during the last years. The development of location technologies has been motivated and fueled by both commercial and non-commercial reasons. Many of the present and future services provided in mobile networks require information about the current location of the mobile terminal, whereby the operators are given an opportunity to increase their revenues by offering these services. Obtaining a reliable estimate of the location of a mobile terminal is important in terms of public safety, for example. It is highly desirable that certain authorities, such as emergency call centers, are able to locate the mobile terminal accurately. Therefore, different authorities have set requirements for the location determination of mobile terminals.

The need to allow new location-based services to be developed has also been attended to in the standardization work of the 3rd Generation Partnership Project (3GPP) by defining a general location service (LCS) architecture. According to this architecture, LCS clients request location information of a mobile terminal from LCS Servers. Generally, the LCS client refers to a software and/or hardware entity that interacts with an LCS Server, which in turn offers LCS capabilities within the Public Land Mobile Network (PLMN) and/or at the service provider. The LCS client is thus a logical functional entity that requests the location information of one or more mobile stations. The LCS clients are divided into internal and external clients (from the point of view of the mobile network). An external LCS client may be an application residing in the Internet, for example, while the internal LCS clients reside in entities within the PLMN. The LCS Server in turn is a functional entity comprising the functions needed in GSM or UMTS networks to support location services. The LCS server consists of components that may be distributed to one or more PLMN and/or service providers. The LCS functions defined in the specifications belong either to the LCS client functional group or to the LCS Server functional group.

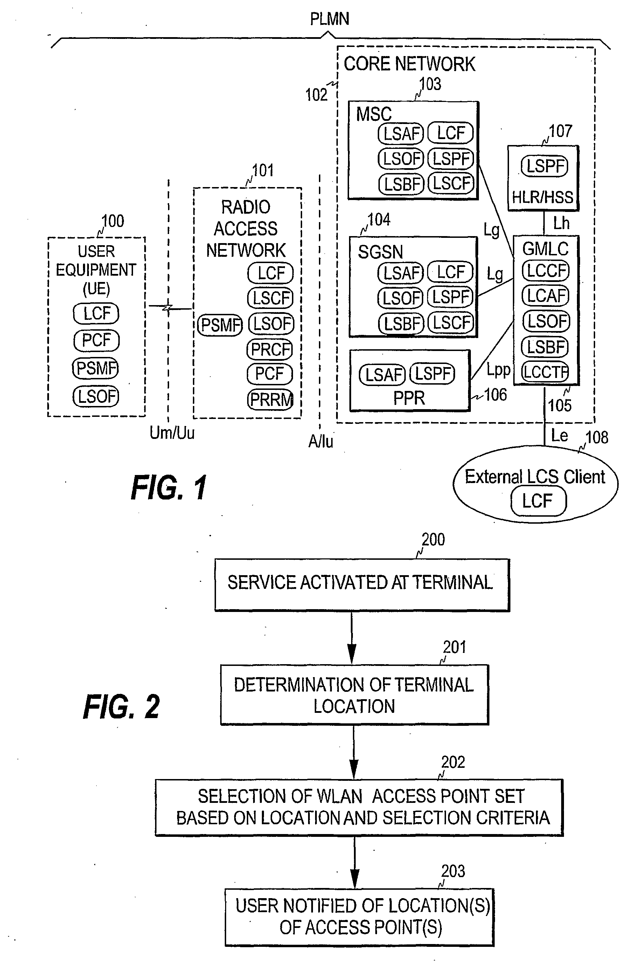

FIG. 1 illustrates the distribution of LCS functional blocks to different network elements, as defined in the 3GPP Technical Specification TS 23.271 (V6.1.0). In the figure, the LCS functions are shown inside rectangles with rounded corners. As shown in the figure, all three interacting domains of a PLMN, i.e. User Equipment (UE) 100, Radio Access Network (RAN) 101, and Core Network (CN) 102, including LCS functions. In this context, the UE is also termed the mobile terminal and the PLMN the mobile communication network.

In the Core Network, LCS functions are allocated to the Mobile services Switching Center (MSC) 103, the Serving GPRS Support Node (SGSN) 104, the Gateway Mobile Location Center (GMLC) 105, the Privacy Profile Register (PPR) 106, and to the Home Location Register/Home Subscriber Server (HLR/HSS) 107. In addition to this, the LCS client may be external to the PLMN, as is the LCS client 108 in FIG. 1. The individual functional blocks are not discussed in this context, since it is not relevant in view of the invention. In this context, it is sufficient to note that LCS functions may reside either inside or outside the PLMN. The functions residing outside the PLMN belong to the LCS client functional group (external LCS clients). In FIG. 1, the LCF function belongs to the client functional group, while the other functions belong to the server functional group. As can be seen from the figure, many of the LCS functions of the LCS server functional group are allocated to the GMLC. An external LCS client thus sees the GMLC as the LCS server. FIG. 1 also shows the interfaces between the different network elements.

In the present invention, the LCS functions are utilized to inform the teminal about the location of at least one WLAN access point which is the most suitable one, as measured by given criteria, such as the distance from the current location of the terminal. The invention thus relates to a location-based service helping the user to find a WLAN access point through which to access the services. The service provider providing the service of the invention may be the operator of the PLMN or a third party locating outside the PLMN. In the former case only the internal LCS functions are utilized, whereas in the latter case an external LCS client requires the location of the terminal from the GMLC, as shown in FIG. 1. As discussed below, a special case of the utilization of internal LCS functions is the implementation of the service in the terminal.

FIG. 2 illustrates, in one embodiment, the basic steps of the service provision. When a user of a mobile communication network wants to know the location of a WLAN access point, he/she activates the service at the terminal (step 200). If the location method is network-based, a service request is sent from the terminal to the network. In response to the service activation, the current location of the terminal is determined utilizing known positioning methods (step 201). When the location has been determined, a set of access points is selected, the set including the most suitable access points, given the location of the terminal and the selection criteria (step 202). During the selection process, a key figure is calculated for at least some of the access points, the key figure indicating the rank order of the said access points. If the only selection criterion is the distance from the terminal, the key figure simply indicates the distance between the terminal and the access point. The key figure may be calculated for all access points available within the geographical area where the service is provided (service area) or only for the access points that meet a certain precondition, whereby the selection criteria include a precondition.

However, the key figure may also be calculated based on several attributes related to the access point, such as the distance from the terminal and the current load of the access point. The selection criteria may also include the frequency band(s) of the access point, or other characteristics of the access points, such as the encryption options available. The selection criteria may also include one or more access point types. These characteristics are typically used as the above precondition. In this way the access points can be selected from among access points with desired characteristics only, such as the access points operating on a certain frequency band or the access points of a certain company only.

The set selected may include only the access point with the best key figure or several access points having the best key figures. The user is then notified of the locations of the access points included in the set (step 203). This may be performed by showing the selected access points on a map shown on the display of the terminal device, for example.

The selection criteria may be fixed or the user may give them in connection with the service request. The user may, for example, request the access points within a certain distance from his or her current location. The user may also indicate a route and request the access points that are located within a certain distance from the route.

The detailed implementation of the above-described method may vary in many ways, depending on in which network entity the selection of the access point set is performed, and depending on whether the location procedure is network-based, mobile-based, mobile-assisted network-based, or network-assisted mobile-based. The LCS client interacting with the LCS Server may reside in the terminal, in the Radio Access Network, in the Core Network or outside the PLMN.

In view of the PLMN, the selection of the access point set may be an internal process (i.e. it may reside in the UE, Radio Access Network, or Core Network) or an external process (i.e. it may reside outside the PLMN). In the following, the internal selection process is discussed first.

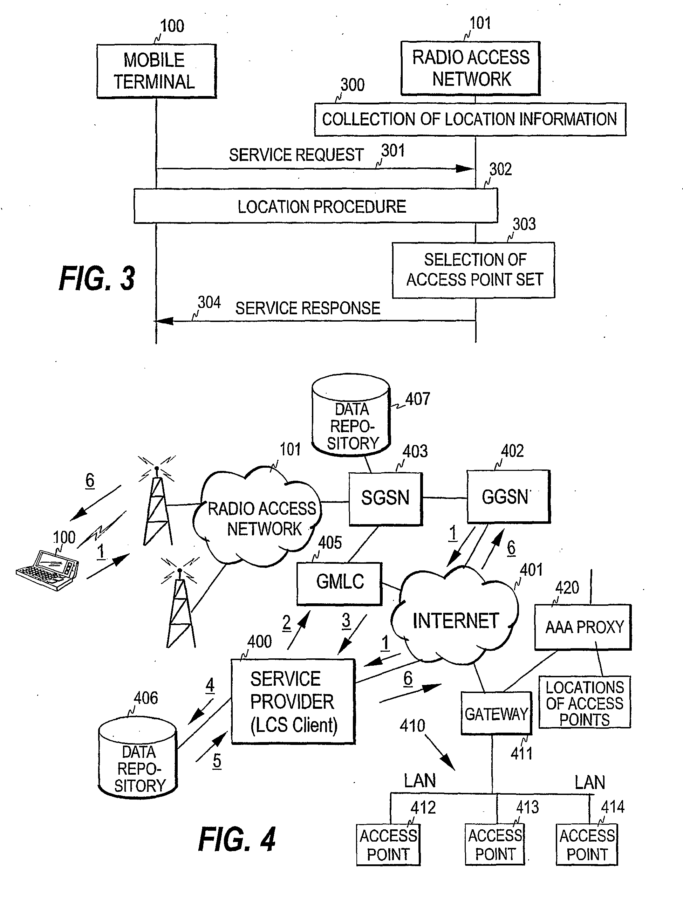

In one embodiment of the invention, the internal selection process resides in the network part of the PLMN (i.e. in the Radio Access Network or in the Core Network). FIG. 3 illustrates the method steps of this embodiment, when the location procedure is network-based. Before the service can be offered, a database including location information is set up at step 300. A prerequisite of the invention is therefore that location information about the access points is collected. Although the collection is typically performed in advance, the collection may also be performed in response to a service request. As discussed below, this location information includes at least the geographical coordinates of each access point available in the service area.

When a WLAN access point is to be found, the terminal sends a service request (step 301) to the network, the service request including the identity of the mobile terminal in question. In response to the service request, the network locates the terminal by initiating a known location procedure (step 302). Based on the location, the network then selects one or more access points (step 303) and sends the information of the said access points to the terminal (step 304). The nature and content of the above steps may vary depending on the location procedure used. When the location procedure is mobile-assisted network-based, the terminal sends the service request, and additionally a signal measurement report, to the network. Based on the signal measurement report, the network first calculates a location estimate for the terminal, and then selects one or more access points, based on the location and predetermined selection criteria. The locations of the selected access points are then transmitted to the terminal. In network-assisted mobile-based positioning, the terminal sends a service request to the network. In response to this, the network perfonns the signal measurements and reports them to the terminal. Based on the measurements, the terminal calculates its location estimate and returns it to the network for the selection of the access point set. In mobile-based positioning, the terminal performs the signal measurements and calculates the location estimate in response to the service being activated by the user. The service request and the location estimate are then sent to the network, which selects the access point set and returns the selected set to the terminal. The terminal may include a GPS receiver for measuring the location estimate.

The above description also applies to the embodiment where the selection of the access point set is made in the Core Network. In this case, however, the above-described information is transferred via the Radio Access Network.

If the internal selection process resides in the terminal, the coordinates of available access points are stored in the terminal prior to the selection process. In network-based positioning, the terminal sends a service request to the network. In response to this, the network performs signal measurements and computes the location estimate of the terminal. The location estimate is then returned to the terminal. At the terminal, the access point set is selected based on the WLAN coordinates stored in the terminal. These coordinates may be downloaded from the network. The network may, for example, send the terminal the coordinates of the access points within a given maximum distance from the terminal. This may be done in connection with the sending of the location estimate, for example. In mobile-assisted network-based positioning, the mobile performs the signal measurements, which it then reports to the network in conjunction with the sending of the service request. In response, the network calculates the location estimate and returns it to the terminal. Otherwise the process is similar to the process concerning network-based positioning. In network-assisted mobile-based positioning, the terminal sends a service request to the network. In response to this, the network performs the signal measurements and reports them to the terminal. Based on the measurements, the terminal calculates its location estimate, which is then used to select the access point set. In mobile-based positioning, the terminal performs the signal measurements and calculates the location estimate in response to the service being activated. Thus, in an extreme case, the method of the invention may be implemented in the terminal only, except that the WLAN coordinates need to be stored in the terminal for the selection process. The WLAN coordinates may be stored when the service is subscribed, or the terminal may send the location estimate to the network, whereby the network returns the coordinates of the access points within a given distance from the terminal. If the terminal is provided with the above-mentioned GPS receiver for measuring the location estimate and if the coordinates are stored in the terminal, no communications are necessary with the network.

In the above examples, the service is implemented within the PLMN and provided by the operator of the PLMN. However, the service provider may also reside outside the PLMN. FIG. 4 illustrates a typical network environment where the server 400 of the service provider is connected to an external network 401, such as the Internet. In this case, the mobile users access the service through a GPRS network, which includes a Serving GPRS Support Node (SGSN) 402 and a Gateway GPRS Support Node (GGSN) 403. One or more WLAN networks 410 are connected to the external network through their respective gateways 411. FIG. 4 shows the steps of the method of the invention with arrows identified by underlined numbers.

When a user of the mobile communication network wants to find out the locations of suitable WLAN access points, he/she activates the service at his/her terminal 100, whereby a service request is sent to the server of the service provider through the Radio Access Network 402 and the Core Network (step 1). The request may also be sent directly through the Radio Access Network to the service provider. In response to the service request, the LCS client on the server of the service provider sends an LCS Service Request, i.e. a request for the location of the terminal, to a GMLC 405 (step 2). The service provider may be connected to the GMLC through the Internet, for example. As discussed above, the LCS Server group functions in the GMLC interact with the LCS client and initiate a location procedure for locating the terminal. As result of the location procedure, which is performed in a known mamer, an LCS Service Response is returned by the GMLC to the LCS client on the server 400 (step 3). The LCS Service Response typically includes the geographical coordinates of the terminal. Utilizing the data stored in a data repository 406, the server 400 then selects the access point set based on the coordinates received from the GMLC (steps 4 and 5). The data stored in the data repository includes the location of each access point within the area covered by the service, whereby the server may compare the location of the terminal to the locations of the access points and thus find the most suitable access points. Depending on the criteria used to select the access points, the data repository may include further information about the access points. Based on the information stored in the data repository and the location of the terminal, the server may calculate a key figure for at least some of the access points and select the access point(s) with the best key figure(s). The server then sends a service response, which includes the locations of the selected access points, to the terminal (step 6), the response being routed substantially along the same path as the service request arrived, i.e. through the GPRS network.

If the operator of the PLMN provides the service, the above functionalities of the server 400 providing the services may, for example, be performed by the SGSN. In this case, a corresponding data repository 407 is in conjunction with the SGSN, as shown in FIG. 4.

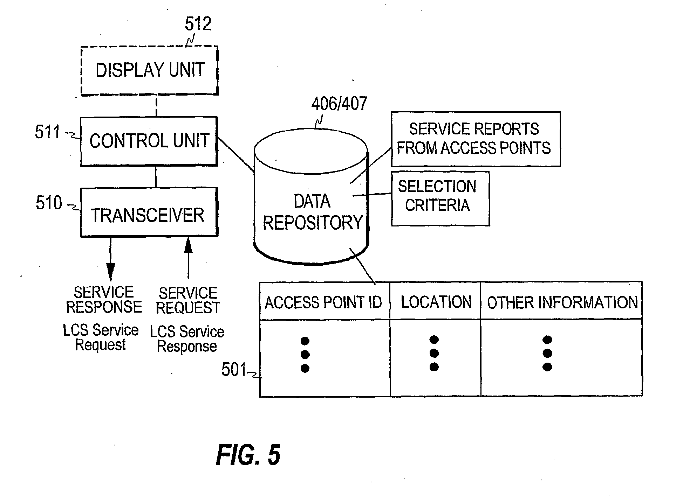

FIG. 5 is a schematic illustration of a network element providing the service of the invention. The network element here is a general term which may refer to a conventional fixed element within the network or to a mobile terminal. As indicated above, the network element is provided with a data repository 406 or 407, which includes data that indicates the locations of the WLAN access points in the service area. The data may be in the form of a table 501, for example. The data repository may further include additional information about the access points. This information may be permanent, such as the frequency bands used by the access points, or changing, such as the load situation of the access point. The information stored may also include the selection criteria used in each case. The selection criteria may be subscriber-specific and they may also change according to the time of day, for example. FIG. 5 further illustrates a transceiver unit 510, which (1) receives the service requests and the LCS Service Responses and (2) transmits the LCS Service Requests and the service responses, and a control unit 511, which performs the selection. However, if the network element is a mobile terminal, the information transferred through the transceiver unit depends on the implementation in the above-described manner. A mobile terminal further includes a display unit 512 for displaying the locations of the access points for the user. Especially if the number of the access points in the data repository is low, as it might be in a tenninal-based data repository, for example, the control unit may also select all access points to be displayed for the user and the user may then select the desired access point(s) for closer examination. It is thus not necessary to implement any specific selection criteria in the control unit. If the selection process is outside the mobile terminal, the control unit of the mobile terminal is provided with the necessary client software for cooperating with the network in the above-described manner.

The data repository may be provisioned (provisioning here refers to the inadvance preparation of the database) in various ways. The most straightforward way is to supply the location information of the access points manually into the data repository and update the information every time a new access point is taken into use. Alternatively, a connection may be established from the WLAN network 410 (FIG. 4) through the Intemet to the server 400 or to the corresponding entity in the PLMN. Each access point may store its own location, whereby the location may be transferred through the connection to the data repository. The connection may then be used to store real-time information about the state of the access point, such as the current load of the access point or the average load over a predetermined period, such as the last 5 minutes. The access points may also compile service reports that describe the current service situation in their respective cells. These service reports may be sent to the data repository to be used in the selection process according to the invention.

One alternative for collecting the location information of the access points is that terminals signal the access point coordinates to the mobile communication network. When a terminal has joined the WLAN network, it may request the coordinates from the serving access point and signal the coordinates to the mobile communication network.

Another alternative is to utilize a mechanism described in a co-pending U.S. Patent Application Serial No. 10/342,325, filed on January 15, 2003. This application describes a mechanism for making the location services provided in a mobile communication network compatible with WLAN networks. In accordance with the said mechanism, each AAA (Authentication Authorization Accounting) proxy stores the location information (geographical coordinates) of the access points of the WLAN network to which the AAA proxy is connected. In a WLAN environment, the home network of a WLAN subscriber is responsible for controlling the access of the subscriber to the network. The AAA proxy is an element that relays AAA information between the WLAN network and the AAA server in the home network of the subscriber. The AAA proxy is part of the WLAN roaming reference model defined for example in the 3GPP technical specification TS 23.234 (V1.2.0). If the solution described in the above-mentioned U.S. application is utilized in connection with the present invention, an AAA proxy 420, shown in FIG. 4, contains the geographical coordinates of each of the access points in the WLAN access network to which the AAA proxy is connected. In the example of FIG. 4, AAA proxy 420 thus contains the geographical coordinates of access points 412 to 414. The location information required by the service of the invention may thus be downloaded from the AAA proxies to the data repository of the invention. This applies especially to cases where the network operator provides the service of the invention.

The WLAN network may also provide access point locations: when a terminal has joined the WLAN network, it may download coordinates of other access points through the serving access point. For example, the coordinates of all access points of a commercial WLAN operator may be downloaded from the currently serving access point.

In the above examples, the selection of the access point set depends on the current location of the mobile terminal. However, the selection may also be independent of the location of the terminal. The user may, for example, request the access points in a city where he is about to travel. As mentioned above, the selection criteria may be given in connection with the service request.

When the selection is based on the current location of the terminal, a subscriber-specific information service may be provided by continuously tracking the terminal. The subscriber may give a distance value that triggers the sending of a notification to the terminal. If the network notices that there are access points within the said distance from the current location of the terminal, the subscriber is informed of the locations of such access points.

Although the invention was described above with reference to the examples shown in the appended drawings, it is obvious that the invention is not limited to these, but may be modified by those skilled in the art without departing from the scope and spirit of the invention. For example, the service may be implemented by different types of user interfaces, such as Short Message Service (SMS), Wireless Application Protocol (WAP), Multimedia Messaging Service (MMS), or World Wide Web (WWW) interfaces. The user may thus send a normal SMS or MMS message that includes criteria for selecting the access point(s). Alternatively, the user may contact a WAP or WWW service in order to select the service and the selection criteria to be used. The mobile terminal may be provided with a built-in user interface for using the service or the user interface may be downloaded from the service provider. The service may also be contacted by an ordinary PC.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. In order to determine the metes and bounds of the invention, therefore, reference should be made to the appended claims.

## Claims

1. A method for providing an access point service for users of a mobile communication network, the method comprising the steps of:
selecting (202, 203) a set of access points on a basis of at least one predetermined selection criterion, the set including at least one access point selected from at least one access network external to a mobile communication network,
notifying a user of a mobile terminal (100) within the mobile communication network of the location of at least one of the access points included in the set, and
determining (201, 302) a location of the mobile terminal,
wherein the selecting step depends on the location,
**characterized in that** the selecting step further comprises
calculating key figures for a plurality of access points, at least one key figure indicating a rank order for a respective access point, wherein the plurality of access points meet a predetermined precondition; and
selecting the set of access points on the basis of their rank order.

2. A method according to claim 1, wherein said at least one access network is a WLAN access network.

3. A method according to claim 1 or 2, wherein the at least one key figure indicates a distance between the respective access point and the mobile terminal.

4. A method according to claim 3, wherein the selecting step (202, 203) further comprises selecting the access point with a minimum distance to the set.

5. A method according to any preceding claim, wherein the set includes one access point.

6. A method according to any preceding claim, wherein the selecting step (202, 203) is performed in the mobile communication network.

7. A method according to any one of claims 1 to 5, wherein the selecting step (202, 203) is performed in a network external to the mobile communication network.

8. A method according to any one of claims 1 to 5, wherein the selecting step (202, 203) is performed in the mobile terminal (100).

9. A method according to any preceding claim, further comprising the step of collecting access point specific information about a first plurality of access points belonging to a second plurality of access networks.

10. A method according to claim 9, wherein the collecting step further comprises collecting location information of the access points, the collecting being performed from predetermined network elements storing the location information.

11. A method according to claim 10, wherein the predetermined network elements are Authentication Authorization Accounting (AAA) proxies (420), each AAA proxy being connected to the WLAN access network and storing geographical locations of the access points in said WLAN access network.

12. A method according to any one of claims 9 to 11, wherein the collecting step comprises collecting status information describing access point states, the status information being used in the selecting step.

13. A method according to any preceding claim, wherein the selecting step (202, 203) depends on current load of the access points.

14. A method according to any preceding claim, wherein the selecting step (202, 203) is subscriber-specific.

15. A method according to any preceding claim, wherein the selecting step (202, 203) comprises selecting the set the access points that are within a given distance from the mobile terminal (100).

16. A system for providing an access point service for users of a mobile communication network, the system comprising:
memory means (406, 407) for storing geographical locations of a plurality of access points belonging to at least one access network external to a mobile communication network,
selection means for selecting a set of access points on a basis of at least one predetermined selection criterion, the set including at least one access point,
indication means for informing a user of the mobile communication network of the geographical location of at least one of the access points included in the set, and
positioning means for determining a location of the mobile terminal (100),
wherein the selection of the set of access points depends on the location of the mobile terminal (100),
**characterized in that** the selection unit of the set of access points is further configured to
determine a first plurality of key figures for a corresponding first plurality of access points, wherein the first plurality of access points belong to the plurality of access points and wherein the first plurality of access points meet a predetermined precondition, wherein each key figure indicates a rank order for a respective access point in regard to at least one attribute within the first plurality of access points; and
select the set of access points from the first plurality of access points on the basis of the first plurality of key figures.

17. A system according to claim 16, wherein the selection means is in the mobile communication network.

18. A system according to claim 16, wherein the selection means is in a network external to the mobile communication network.

19. A system according to any one of claims 16 to 18, wherein the indication means comprises a transmitter unit for sending the mobile terminal (100) a notification indicating the geographical location of at least one of the access points included in the set.

20. A system according to any one of claims 16 to 19, wherein the indication means comprises a display unit (512) for displaying the geographical location of at least one of the access points included in the set.

21. A network element for providing an access point service for users of a mobile communications network, the network element comprising:
a data repository (406, 407) for storing geographical locations of a plurality of access point belonging to at least one access network external to a mobile communication network,
a control unit (511) for selecting a set of access points on a basis of at least one predetermined selection criterion, the set including at least one access point, and
indication means for informing a user of the mobile communications network of the geographical location of at least one access point included in the set,
wherein the control unit is adapted to select the set of access points on a basis of said geographical locations and a given location, wherein the given location indicates a location of a mobile terminal (100) within the mobile communication network,
**characterized in that** the control unit is further configured to
determine a first plurality of key figures for a corresponding first plurality of access points, wherein the first plurality of access points belong to the plurality of access points and wherein the first plurality of access points meet a predetermined precondition, wherein each key figure indicates a rank order for a respective access point in regard to at least one attribute within the first plurality of access points; and
select the set of access points from the first plurality of access points on the basis of the first plurality of key figures.

22. A network element according to claim 21, further comprising a receiver unit for receiving the given location from another network element.

23. A network element according to claim 21 or 22, wherein the indication means comprises a transmitter unit for sending the mobile terminal (100) a notification indicating the geographical location of at least one of the access points included in the set.

24. A network element according to any one of claims 21 to 23, wherein the indication means include a display unit (512) for displaying the geographical location of at least one of the access points included in the set.

25. A network element according to any one of claims 21 to 24, further comprising location determination means for determining the given location, said mobile terminal (100) being the network element.

26. A network element according to claim 25, wherein the location determination means comprises a GPS receiver.

27. A mobile terminal (100) comprising:
a data repository (406, 407) for storing geographical locations of a plurality of access points belonging to at least one access network external to the mobile communication network,
a controller (511) configured to select a set of access points, the set including at least one access point, and
an indicator configured to inform a user of the mobile terminal of the geographical location of at least one of the access points included in the set,
wherein the selection of the set of access points depends on the location of the mobile terminal,
**characterized in that** the controller (511) is further configured to
determine a first plurality of key figures for a corresponding first plurality of access points, wherein the first plurality of access points belong to the plurality of access points and wherein the first plurality of access points meet a predetermined precondition, wherein each key figure indicates a rank order for a respective access point in regard to at least one attribute within the first plurality of access points; and
select the set of access points from the first plurality of access points on the basis of the first plurality of key figures.

## Patentansprüche

1. Verfahren zum Bereitstellen eines Zugangspunktdienstes für Nutzer eines Mobilkommunikationsnetzes, wobei das Verfahren die folgenden Schritte umfasst:
Auswählen (202, 203) einer Menge von Zugangspunkten anhand mindestens eines zuvor festgelegten Auswahlkriteriums, wobei die Menge mindestens einen Zugangspunkt enthält, der aus mindestens einem Zugangsnetz außerhalb eines Mobilkommunikationsnetzes ausgewählt ist,
Benachrichtigen eines Nutzers eines mobilen Endgeräts (100) innerhalb des Mobilkommunikationsnetzes über den Standort von mindestens einem der in der Menge enthaltenen Zugangspunkte, und
Bestimmen (201, 302) eines Standortes des mobilen Endgeräts,
wobei der Auswahlschritt von dem Standort abhängt,
**dadurch gekennzeichnet, dass** der Auswahlschritt ferner Folgendes umfasst:
Berechnen von Kennzahlen für eine Vielzahl von Zugangspunkten, wobei mindestens eine Kennzahl eine Rangfolge für einen jeweiligen Zugangspunkt angibt, wobei die Vielzahl von Zugangspunkten eine zuvor festgelegte Vorbedingung erfüllt; und
Auswählen der Menge von Zugangspunkten anhand ihrer Rangfolge.

2. Verfahren nach Anspruch 1, wobei das mindestens eine Zugangsnetz ein WLAN-Zugangsnetz ist.

3. Verfahren nach Anspruch 1 oder 2, wobei die mindestens eine Kennzahl eine Entfernung zwischen dem jeweiligen Zugangspunkt und dem mobilen Endgerät angibt.

4. Verfahren nach Anspruch 3, wobei der Auswahlschritt (202, 203) ferner das Auswählen des Zugangspunkts mit einer minimalen Entfernung zu der Menge umfasst.

5. Verfahren nach einem vorhergehenden Anspruch, wobei die Menge einen Zugangspunkt enthält.

6. Verfahren nach einem vorhergehenden Anspruch, wobei der Auswahlschritt (202, 203) in dem Mobilkommunikationsnetz durchgeführt wird.

7. Verfahren nach einem der Ansprüche 1 bis 5, wobei der Auswahlschritt (202, 203) in einem Netz außerhalb des Mobilkommunikationsnetzes durchgeführt wird.

8. Verfahren nach einem der Ansprüche 1 bis 5, wobei der Auswahlschritt (202, 203) in dem mobilen Endgerät (100) durchgeführt wird.

9. Verfahren nach einem vorhergehenden Anspruch, das ferner den Schritt des Erhebens von zugangspunktspezifischen Informationen über eine erste Vielzahl von Zugangspunkten, die zu einer zweiten Vielzahl von Zugangsnetzen gehört, umfasst.

10. Verfahren nach Anspruch 9, wobei der Erhebungsschritt ferner das Erheben von Ortungsinformationen der Zugangspunkte umfasst, wobei das Erheben von zuvor festgelegten Netzelementen durchgeführt wird, die die Ortungsinformationen speichern.

11. Verfahren nach Anspruch 10, wobei die zuvor festgelegten Netzelemente Authentication-Authorization-Accounting-Proxies (AAA-Proxies) (420) sind, wobei jeder AAA-Proxy mit dem WLAN-Zugangsnetz verbunden ist und geographische Standorte der Zugangspunkte in dem WLAN Zugangsnetz speichert.

12. Verfahren nach einem der Ansprüche 9 bis 11, wobei der Erhebungsschritt das Erheben von Statusinformationen, die Zugangspunkt-Zustände beschreiben, umfasst, wobei die Statusinformationen in dem Auswahlschritt verwendet werden.

13. Verfahren nach einem vorhergehenden Anspruch, wobei der Auswahlschritt (202, 203) von der momentanen Last der Zugangspunkte abhängt.

14. Verfahren nach einem vorhergehenden Anspruch, wobei der Auswahlschritt (202, 203) teilnehmerspezifisch ist.

15. Verfahren nach einem vorhergehenden Anspruch, wobei der Auswahlschritt (202, 203) die Auswahl der Menge von Zugangspunkten umfasst, die innerhalb einer gegebenen Entfernung von dem mobilen Endgerät (100) liegen.

16. System zur Bereitstellung eines Zugangspunktdienstes für Nutzer eines Mobilkommunikationsnetzes, wobei das System Folgendes umfasst:
Speichermittel (406, 407) zum Speichern geographischer Standorte einer Vielzahl von Zugangspunkten, die zu mindestens einem Zugangsnetz außerhalb eines Mobilkommunikationsnetzes gehören,
Auswahlmittel zum Auswählen einer Menge von Zugangspunkten anhand mindestens eines zuvor festgelegten Auswahlkriteriums, wobei die Menge mindestens einen Zugangspunkt enthält, Angabemittel, um einen Nutzer des Mobilkommunikationsnetzes über den geographischen Standort von mindestens einem der in der Menge enthaltenen Zugangspunkte zu informieren, und
Positionierungsmittel, um einen Standort des mobilen Endgeräts (100) zu bestimmen,
wobei die Auswahl der Menge von Zugangspunkten von dem Standort des mobilen Endgeräts (100) abhängt,
**dadurch gekennzeichnet, dass** die Auswahleinheit der Menge von Zugangspunkten ferner konfiguriert ist zur
Bestimmung einer ersten Vielzahl von Kennzahlen für eine entsprechende erste Vielzahl von Zugangspunkten, wobei die erste Vielzahl von Zugangspunkten zu der Vielzahl von Zugangspunkten gehört und wobei die erste Vielzahl von Zugangspunkten eine zuvor festgelegte Vorbedingung erfüllt, wobei jede Kennzahl eine Rangfolge für einen jeweiligen Zugangspunkt hinsichtlich mindestens eines Attributs innerhalb der ersten Vielzahl von Zugangspunkten angibt; und
Auswahl der Menge von Zugangspunkten aus der ersten Vielzahl von Zugangspunkten anhand der ersten Vielzahl von Kennzahlen.

17. System nach Anspruch 16, wobei sich die Auswahlmittel in dem Mobilkommunikationsnetz befinden.

18. System nach Anspruch 16, wobei sich die Auswahlmittel in einem Netz außerhalb des Mobilkommunikationsnetzes befinden.

19. System nach einem der Ansprüche 16 bis 18, wobei die Angabemittel eine Sendereinheit zum Senden einer Benachrichtigung, die den geographischen Standort mindestens eines der in der Menge enthaltenen Zugangspunkte angibt, an das mobile Endgerät (100) umfassen.

20. System nach einem der Ansprüche 16 bis 19, wobei die Angabemittel eine Anzeigeeinheit (512) zum Anzeigen des geographischen Standortes mindestens eines der in der Menge enthaltenen Zugangspunkte umfassen.

21. Netzelement zur Bereitstellung eines Zugangspunktdienstes für Nutzer eines Mobilkommunikationsnetzes, wobei das Netzelement Folgendes umfasst:
einen Datenkatalog (406, 407) zum Speichern geographischer Standorte einer Vielzahl von Zugangspunkten, die zu mindestens einem Zugangsnetz außerhalb eines Mobilkommunikationsnetzes gehören,
eine Steuereinheit (511) zum Auswählen einer Menge von Zugangspunkten anhand mindestens eines zuvor festgelegten Auswahlkriteriums, wobei die Menge mindestens einen Zugangspunkt enthält, und
Angabemittel, um einen Nutzer des Mobilkommunikationsnetzes über den geographischen Standort von mindestens einem in der Menge enthaltenen Zugangspunkt zu informieren,
wobei die Steuereinheit so beschaffen ist, dass sie die Menge von Zugangspunkten anhand der graphischen Standorte und eines gegebenen Standortes auswählt, wobei der gegebene Standort einen Standort eines mobilen Endgeräts (100) innerhalb des Mobilkommunikationsnetzes angibt,
**dadurch gekennzeichnet, dass** die Steuereinheit ferner beschaffen ist zur
Bestimmung einer ersten Vielzahl von Kennzahlen für eine entsprechende erste Vielzahl von Zugangspunkten, wobei die erste Vielzahl von Zugangspunkten zu der Vielzahl von Zugangspunkten gehört und wobei die erste Vielzahl von Zugangspunkten eine zuvor festgelegte Vorbedingung erfüllt, wobei jede Kennzahl eine Rangordnung für einen jeweiligen Zugangspunkt hinsichtlich mindestens eines Attributs innerhalb der ersten Vielzahl von Zugangspunkten angibt; und
Auswahl der Menge von Zugangspunkten aus der ersten Vielzahl von Zugangspunkten anhand der ersten Vielzahl von Kennzahlen.

22. Netzelement nach Anspruch 21, das ferner eine Empfängereinheit zum Empfangen des gegebenen Standortes von einem anderen Netzelement umfasst.

23. Netzelement nach Anspruch 21 oder 22, wobei die Angabemittel eine Sendereinheit zum Senden einer Benachrichtigung, die den geographischen Standort von mindestens einem der in der Menge enthaltenen Zugangspunkte angibt, an das mobile Endgerät (100) umfassen.

24. Netzelement nach einem der Ansprüche 21 bis 23, wobei die Angabemittel eine Anzeigeeinheit (512) zum Anzeigen des geographischen Standortes von mindestens einem der in der Menge enthaltenen Zugangspunkte enthalten.

25. Netzelement nach einem der Ansprüche 21 bis 24, das ferner Standortsbestimmungsmittel zum Bestimmen des gegebenen Standortes umfasst, wobei das mobile Endgerät (100) das Netzelement ist.

26. Netzelement nach Anspruch 25, wobei die Standortsbestimmungsmittel einen GPS-Empfänger umfassen.

27. Mobiles Endgerät (100), das Folgendes umfasst:
einen Datenkatalog (406, 407) zum Speichern geographischer Standorte einer Vielzahl von Zugangspunkten, die zu mindestens einem Zugangsnetz außerhalb des Mobilkommunikationsnetzes gehören,
eine Steuereinheit (511), die so konfiguriert ist, dass sie eine Menge von Zugangspunkten auswählt, wobei die Menge mindestens einen Zugangspunkt enthält, und
eine Anzeigeeinrichtung, die so konfiguriert ist, dass sie einen Nutzer des mobilen Endgeräts über den geographischen Standort von mindestens einem der in der Menge enthaltenen Zugangspunkte informiert,
wobei die Auswahl der Menge von Zugangspunkten von dem Standort des mobilen Endgeräts abhängt,
**dadurch gekennzeichnet, dass** die Steuereinheit (511) ferner beschaffen ist zur
Bestimmung einer ersten Vielzahl von Kennzahlen für eine entsprechende erste Vielzahl von Zugangspunkten, wobei die erste Vielzahl von Zugangspunkten zu der Vielzahl von Zugangspunkten gehört und wobei die erste Vielzahl von Zugangspunkten eine zuvor festgelegte Vorbedingung erfüllt, wobei jede Kennzahl eine Rangordnung für einen jeweiligen Zugangspunkt hinsichtlich mindestens eines Attributs innerhalb der ersten Vielzahl von Zugangspunkten angibt; und
Auswahl der Menge von Zugangspunkten aus der ersten Vielzahl von Zugangspunkten anhand der ersten Vielzahl von Kennzahlen.

## Revendications

1. Un procédé de fourniture d'un service de point d'accès pour des utilisateurs d'un réseau de communication mobile, le procédé comprenant les étapes suivantes :
la sélection (202, 203) d'un ensemble de points d'accès en fonction d'au moins un critère de sélection prédéterminé, l'ensemble comprenant au moins un point d'accès sélectionné à partir d'au moins un réseau d'accès externe à un réseau de communication mobile,
la notification à un utilisateur d'un terminal mobile (100) à l'intérieur du réseau de communication mobile de l'emplacement d'au moins un des points d'accès inclus dans l'ensemble, et
la détermination (201, 302) d'un emplacement du terminal mobile,
dans lequel l'étape de sélection dépend de l'emplacement,
**caractérisé en ce que** l'étape de sélection comprend en outre
le calcul de chiffres clés pour une pluralité de points d'accès, au moins un chiffre clé indiquant un ordre de classement pour un point d'accès respectif, la pluralité de points d'accès répondant à une précondition prédéterminée, et
la sélection de l'ensemble de points d'accès en fonction de leur ordre de classement.

2. Un procédé selon la revendication 1, dans lequel ledit au moins un réseau d'accès est un réseau d'accès WLAN.

3. Un procédé selon la revendication 1 ou 2, dans lequel le au moins un chiffre clé indique une distance entre le point d'accès respectif et le terminal mobile,

4. Un procédé selon la revendication 3, dans lequel l'étape de sélection (202, 203) comprend en outre la sélection du point d'accès avec une distance minimale à l'ensemble.

5. Un procédé selon l'une quelconque des revendications précédentes, dans lequel l'ensemble comprend un point d'accès.

6. Un procédé selon l'une quelconque des revendications précédentes, dans lequel l'étape de sélection (202, 203) est exécutée dans le réseau de communication mobile.

7. Un procédé selon l'une quelconque des revendications 1 à 5, dans lequel l'étape de sélection (202, 203) est exécutée dans un réseau externe au réseau de communication mobile.

8. Un procédé selon l'une quelconque des revendications 1 à 5, dans lequel l'étape de sélection (202, 203) est exécutée dans le terminal mobile (100).

9. Un procédé selon l'une quelconque des revendications précédentes, comprenant en outre l'étape de collecte d'informations spécifiques à un point d'accès relatives à une première pluralité de points d'accès appartenant à une deuxième pluralité de réseaux d'accès.

10. Un procédé selon la revendication 9, dans lequel l'étape de collecte comprend en outre la collecte d'informations d'emplacement des points d'accès, la collecte étant exécutée à partir d'éléments de réseau prédéterminés conservant en mémoire les informations d'emplacement.

11. Un procédé selon la revendication 10, dans lequel les éléments de réseau prédéterminés sont des mandataires Authentification Autorisation Traçabilité (AAA) (420), chaque mandataire AAA étant raccordé au réseau d'accès WLAN et conservant en mémoire des emplacements géographiques des points d'accès dans ledit réseau d'accès WLAN.

12. Un procédé selon l'une quelconque des revendications 9 à 11, dans lequel l'étape de collecte comprend la collecte d'informations d'état décrivant des états de points d'accès, les informations d'état étant utilisées dans l'étape de sélection.

13. Un procédé selon l'une quelconque des revendications précédentes, dans lequel l'étape de sélection (202, 203) dépend d'une charge actuelle des points d'accès.

14. Un procédé selon l'une quelconque des revendications précédentes, dans lequel l'étape de sélection (202, 203) est propre à l'abonné.

15. Un procédé selon l'une quelconque des revendications précédentes, dans lequel l'étape de sélection (202, 203) comprend la sélection de l'ensemble des points d'accès qui se situent à l'intérieur d'une distance donnée du terminal mobile (100).

16. Un système de fourniture d'un service de point d'accès pour des utilisateurs d'un réseau de communication mobile, le système comprenant :
un moyen à mémoire (406, 407) destiné à conserver en mémoire des emplacements géographiques d'une pluralité de points d'accès appartenant à au moins un réseau d'accès externe à un réseau de communication mobile,
un moyen de sélection destiné à la sélection d'un ensemble de points d'accès en fonction d'au moins un critère de sélection prédéterminé, l'ensemble comprenant au moins un point d'accès,
un moyen d'indication destiné à informer un utilisateur du réseau de communication mobile de l'emplacement géographique d'au moins un des points d'accès inclus dans l'ensemble, et
un moyen de positionnement destiné à la détermination d'un emplacement du terminal mobile (100),
dans lequel la sélection de l'ensemble de points d'accès dépend de l'emplacement du terminal mobile (100),
**caractérisé en ce que** l'unité de sélection de l'ensemble de points d'accès est configurée en outre de façon à
déterminer une première pluralité de chiffres clés pour une première pluralité correspondante de points d'accès, la première pluralité de points d'accès appartenant à la pluralité de points d'accès et la première pluralité de points d'accès répondant à une précondition prédéterminée, chaque chiffre clé indiquant un ordre de classement pour un point d'accès respectif par rapport à au moins un attribut à l'intérieur de la première pluralité de points d'accès, et
sélectionner l'ensemble de points d'accès à partir de la première pluralité de points d'accès en fonction de la première pluralité de chiffres clés.

17. Un système selon la revendication 16, dans lequel le moyen de sélection se situe dans le réseau de communication mobile.

18. Un système selon la revendication 16, dans lequel le moyen de sélection se situe dans un réseau externe au réseau de communication mobile.

19. Un système selon l'une quelconque des revendications 16 à 18, dans lequel le moyen d'indication comprend un émetteur destiné à l'envoi au terminal mobile (100) d'une notification indiquant l'emplacement géographique d'au moins un des points d'accès inclus dans l'ensemble.

20. Un système selon l'une quelconque des revendications 16 à 19, dans lequel le moyen d'indication comprend une unité d'affichage (512) destinée à l'affichage de l'emplacement géographique d'au moins un des points d'accès inclus dans l'ensemble.

21. Un élément de réseau destiné à la fourniture d'un service de point d'accès pour des utilisateurs d'un réseau de communication mobile, l'élément de réseau comprenant :
un référentiel de données (406, 407) destiné à la conservation en mémoire d'emplacements géographiques d'une pluralité de points d'accès appartenant à au moins un réseau d'accès externe à un réseau de communication mobile,
une unité de commande (511) destinée à la sélection d'un ensemble de points d'accès en fonction d'au moins un critère de sélection prédéterminé, l'ensemble comprenant au moins un point d'accès, et
un moyen d'indication destiné à informer un utilisateur du réseau de communication mobile de l'emplacement géographique d'au moins un point d'accès inclus dans l'ensemble,
dans lequel l'unité de commande est adaptée de façon à sélectionner l'ensemble de points d'accès en fonction desdits emplacements géographiques et d'un emplacement donné, l'emplacement donné indiquant un emplacement d'un terminal mobile (100) à l'intérieur du réseau de communication mobile,
**caractérisé en ce que** l'unité de commande est configurée en outre de façon à
déterminer une première pluralité de chiffres clés pour une première pluralité correspondante de points d'accès, la première pluralité de points d'accès appartenant à la pluralité de points d'accès et la première pluralité de points d'accès répondant à une précondition prédéterminée, chaque chiffre clé indiquant un ordre de classement pour un point d'accès respectif par rapport à au moins un attribut à l'intérieur de la première pluralité de points d'accès, et
sélectionner l'ensemble de points d'accès à partir de la première pluralité de points d'accès en fonction de la première pluralité de chiffres clés.

22. Un élément de réseau selon la revendication 21, comprenant en outre un récepteur destiné à la réception de l'emplacement donné à partir d'un autre élément de réseau.

23. Un élément de réseau selon la revendication 21 ou 22, dans lequel le moyen d'indication comprend un émetteur destiné à l'envoi au terminal mobile (100) d'une notification indiquant l'emplacement géographique d'au moins un des points d'accès inclus dans l'ensemble.

24. Un élément de réseau selon l'une quelconque des revendications 21 à 23, dans lequel le moyen d'indication comprend une unité d'affichage (512) destinée à l'affichage de l'emplacement géographique d'au moins un des points d'accès inclus dans l'ensemble.

25. Un élément de réseau selon l'une quelconque des revendications 21 à 24, comprenant en outre un moyen de détermination d'emplacement destiné à la détermination de l'emplacement donné, ledit terminal mobile (100) étant l'élément de réseau.

26. Un élément de réseau selon la revendication 25, dans lequel le moyen de détermination d'emplacement comprend un récepteur GPS.

27. Un terminal mobile (100) comprenant :
un référentiel de données (406, 407) destiné à la conservation en mémoire des emplacements géographiques d'une pluralité de points d'accès appartenant à au moins un réseau d'accès externe au réseau de communication mobile,
un système de commande (511) configuré de façon à sélectionner un ensemble de points d'accès, l'ensemble comprenant au moins un point d'accès, et
un indicateur configuré de façon à informer un utilisateur du terminal mobile de l'emplacement géographique d'au moins un des points d'accès inclus dans l'ensemble,
dans lequel la sélection de l'ensemble de points d'accès dépend de l'emplacement du terminal mobile,
**caractérisé en ce que** le système de commande (511) est configuré en outre de façon à
déterminer une première pluralité de chiffres clés pour une première pluralité correspondante de points d'accès, la première pluralité de points d'accès appartenant à la pluralité de points d'accès et la première pluralité de points d'accès répondant à une précondition prédéterminée, chaque chiffre clé indiquant un ordre de classement pour un point d'accès respectif par rapport à au moins un attribut à l'intérieur de la première pluralité de points d'accès, et
sélectionner l'ensemble de points d'accès à partir de la première pluralité de points d'accès en fonction de la première pluralité de chiffres clés.
